# FASCICULE DE BREVET EUROPEEN

(11) **EP 1 353 790 B1**
(45) Date de publication et mention de la délivrance du brevet: **29.06.2005**
(21) Numéro de dépôt: 02704652.3
(22) Date de dépôt: 14.01.2002
(51) Int. Cl.: B29D 30/24

(54) **TAMBOUR DE CONFORMATION POUR LA FABRICATION DE PNEUMATIQUES**
FORMGEBUNGSTROMMEL FÜR DIE REIFENHERSTELLUNG
TYRE BUILDING DRUM

(30) Priorité: 15.01.2001 FR 0100776
(43) Date de publication de la demande: 22.10.2003
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BARODY, Didier, F-63670 Le Cendre (FR)
(74) Mandataire: Bauvir, Jacques
(86) Numéro de dépôt international: PCT/EP2002/000281
(87) Numéro de publication internationale: WO 2002/055290

(56) Documents cités:
- EP-A- 0 661 150
- DE-A- 2 300 330
- US-A- 2 603 581
- US-A- 3 366 526
- US-A- 4 510 012
- US-A- 5 164 035

## Description

L'invention concerne un tambour de conformation de carcasses de pneumatiques. La conformation de la carcasse est une étape de la fabrication de pneumatique consistant à rapprocher l'un de l'autre les logements de réception des bourrelets du pneumatique sur le tambour et à réaliser l'expansion radiale de tout ou partie de la carcasse déposée sur ce tambour.

L'invention concerne plus particulièrement un tambour de conformation dit « sans membrane », les membranes servant généralement de surface de réception étanche aux carcasses de pneumatiques, à l'intérieur de ces membranes un fluide permettant de les gonfler afin de conformer lesdites carcasses.

Différents types de tambour de conformation dits « sans membrane » existent et principalement deux grandes catégories, celle des tambours dans lesquels la conformation de la carcasse est obtenue par la pression d'un fluide directement au contact des parois de ladite carcasse et la catégorie des tambours utilisant des dispositifs mécaniques d'actionnement de plaques ou autres organes que l'on désignera de manière générique par le mot « plaque », constituant la surface de réception de la carcasse.

On s'intéresse ici à la fabrication de pneumatiques dont la carcasse est initialement presque cylindrique et qui doit être conformée de sorte à être fortement bombée, les talons de pneumatique de ces carcasses étant axialement assez proches, tels que c'est le cas pour certains pneumatiques poids lourds, de compétition ou d'avion. Il est aisé de comprendre que pour des questions de poids et de stabilité lors de la fabrication, il est nécessaire de faire appel à la catégorie de tambours utilisant des dispositifs mécaniques. Cependant la difficulté naît d'une part de la très grande différence de diamètre entre la carcasse avant et après conformation (qui peut aller jusqu'à 200%), et d'autre part du très faible diamètre de la carcasse à conformer (telle que des pneumatiques destinés à être montés sur des jantes de diamètre 13 pouces), ce qui suppose que les plaques et leur mécanisme d'actionnement occupent un espace aussi réduit que possible en position rétractée du tambour et soient néanmoins susceptibles d'un déploiement radial considérable.

Des solutions ont été proposées, telles que celle présentée dans la publication JP-49-13629 qui décrit un tambour utilisant pour procéder à la conformation de la carcasse des « plaques » légèrement bombées montées respectivement sur des bielles croisées. Bien que semblant fiable, ce tambour ne peut pas accepter d'écart important entre diamètre de la surface de réception du tambour en position rétractée et le diamètre de la surface de réception du tambour en position expansée, de plus, le diamètre minimal du tambour n'est pas susceptible d'accepter des pneumatiques destinés à être montés sur des jantes de diamètre 13 pouces par exemple. En effet, les bielles croisées présentent encore un encombrement important en position rétractée du tambour.

D'autres tambours de cette catégorie résolvent ce problème en réalisant un encombrement réduit des plaques et de leurs mécanismes d'expansion en position rétractée des tambours, tels que celui décrit dans la publication FR-830 916 qui possède des plaques constituant la surface de réception du tambour, actionnées respectivement par un mécanisme d'engrenages. Ce mécanisme d'engrenages comprend pour chaque plaque deux pignons coopérant l'un avec l'autre et portés chacun par l'extrémité d'un bras comportant trois parties avec des rayons de courbure distincts, l'autre extrémité du bras étant mobile axialement sur le corps du tambour. Un tel tambour, du fait de la complexité du mécanisme d'engrenages, ne peut pas permettre d'accepter des pneumatiques ayant des diamètres de la carcasse à conformer différents même dans une faible plage.

Quoique différents, mais toujours en raison de leur encombrement, les mêmes observations sont applicables aux mécanismes de relevage tels que proposés dans les publications DE 2 300 330 et US 3 366 526.

Le tambour divulgué dans la publication US 4 510 012 décrit un mécanisme de relevage dans la direction radial d'un ensemble de plaques reliées à des bras basculants dans des plans parallèles à l'axe du tambour grâce au déplacement axial d'une couronne agissant en combinaison avec un contre bras relié à une couronne fixe. Ce mécanisme reste lui aussi limité dans la possibilité de faire réaliser aux plaques une variation de diamètre conséquente. En effet, comme on le verra par la suite à la lumière de l'invention, les plaques ne pivotent pas autour d'un axe parallèle à l'axe du tambour, ce qui limite la possibilité d'obtenir un faible diamètre en position rétractée.

L'invention vise à pallier l'ensemble de ces inconvénients.

Dans ce qui suit, on entendra par direction axiale, radiale, circonférentielle les directions parallèles aux directions axiale, radiale et circonférentielle relatives au tambour.

Selon l'invention, le tambour de conformation de carcasses de pneumatique, monté sur un fût, comporte deux systèmes de prise de bourrelet d'une carcasse à conformer montés sur ledit fût et une surface de réception de ladite carcasse constituée par l'ensemble des surfaces extérieures de plaques arrangées circonférentiellement autour du fût, des moyens d'expansion mécaniques reliés au fût et à des chapes, permettant de déplacer les plaques radialement entre une position rétractée et une position expansée du tambour, caractérisé en ce que les plaques sont reliées aux chapes par l'intermédiaire d'articulations situées sur la face intérieure de chacune desdites plaques et permettant un pivotement des plaques autour d'axes parallèles à l'axe du tambour, et comportent des moyens de guidage par lesquels chaque plaque s'appuie par sa face intérieure sur le moyen de guidage de la plaque adjacente, autorisant le positionnement des surfaces extérieures de chaque plaque à un niveau radial constant en position expansée du tambour et autorisant un basculement des plaques autour des articulations de façon à ce qu'elles se superposent les unes aux autres en position rétractée du tambour ce qui pour effet de réduire l'encombrement du tambour dans cette position et d'offrir un diamètre minimal très réduit.

D'autres caractéristiques et avantages de l'invention apparaîtront à la lecture d'un exemple de réalisation d'un tambour conforme à l'invention en référence au dessin annexé dans lequel :
- les figures 1A et 1B sont des représentations schématiques en demi-coupes axiales du tambour conforme à l'invention respectivement en position rétractée du tambour et en position expansée du tambour,
- la figure 2 est une représentation perspective partielle du tambour conforme à l'invention dans sa position expansée dans la direction de la flèche F représentée sur la figure 1B,
- la figure 3 est un agrandissement de quelques plaques représentées sur la figure 2,
- la figure 4 est une représentation en coupe partielle de quelques plaques représentées sur la figure 1B selon la ligne IV-IV de cette figure,
- la figure 5 est une représentation perspective d'une plaque représentée sur la figure 2.

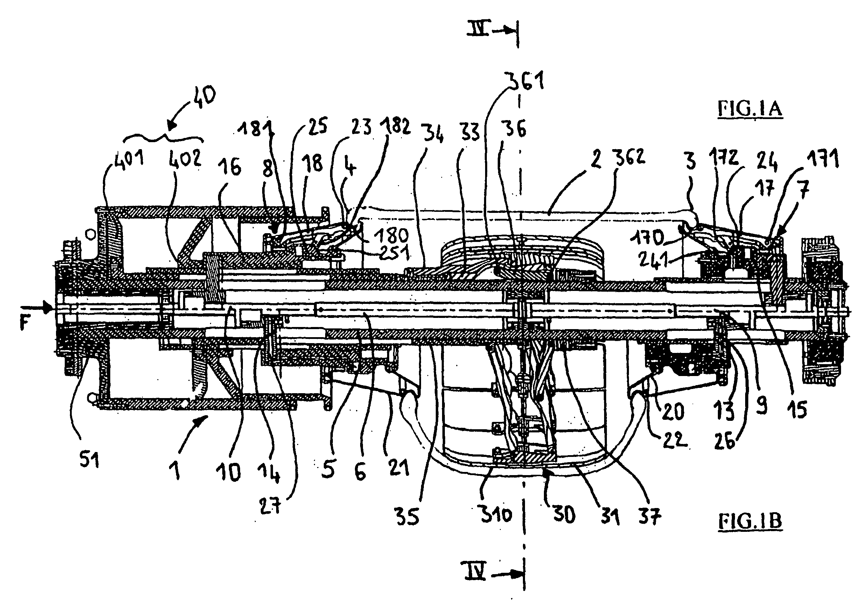

Selon les figures 1A et 1B, le tambour 1 comprend un fût 5 dans lequel est montée une vis centrale rotative 6, une extrémité 51 du fût 5 permettant le montage du tambour sur une machine d'assemblage. Le tambour 1 comprend également une surface de réception de la carcasse de pneumatique à conformer qui sera détaillée plus loin dans la description.

Une carcasse de pneumatique 2 avec deux bourrelets 3 et 4, est également représentée de façon très schématique positionnée au-dessus du tambour 1 avant d'être reprise par ce dernier sur la figure 1A et après conformation sur la figure 1B. Pour ce faire, le fût 5 porte deux systèmes de prise de bourrelets 7 et 8 dont le mouvement axial relatif est commandé grâce à la vis centrale 5.

La vis centrale 6 comporte des zones filetées à deux pas inversées 9 et 10 qui actionnent les systèmes de prise de bourrelets 7 et 8 par l'intermédiaire de doigts 13 et 14 entraînant chacun un support 15 (16) faisant partie de chaque système de prise de bourrelet.

Chacun de ces systèmes de prise de bourrelet 7 (8) comprend effectivement en plus du support 15 (16), une pluralité de segments rigides 17 (18) répartis régulièrement autour du fût 5 et s'étendant sensiblement dans la direction axiale et une membrane élastique 20 (21) qui enveloppe les segments, chaque membrane étant fixée par ses deux extrémités sur le support 15 (16).

Chaque segment rigide 17 (18) comporte un logement 170 (180) de réception d'un bourrelet 3 (4) de la carcasse (2) à son extrémité disposée axialement vers l'intérieur du tambour 1. Un ressort circonférentiel 22 (23) est disposé dans une gorge à l'arrière du logement 170 (180) de tous les segments sous la membrane 20 (21), de manière à bloquer l'arrière du bourrelet et à provoquer le rappel en position rétractée des segments 17 (18) et donc du tambour. La présence de la membrane permet de faciliter une rotation des bourrelets de la carcasse lors de la conformation.

Les segments 17 (18) peuvent basculer radialement par leurs extrémités disposées axialement vers l'extérieur du tambour 1 autour d'articulations 171 (181) afin de venir au contact des bourrelets de la carcasse et de réaliser leur prise.

Un coulisseau 24 (25) est monté mobile axialement par rapport aux segments 17 (18) et au support 15 (16). Le coulisseau 24 (25) comporte une face formant une came inclinée 241 (251) par rapport à l'axe du tambour, définissant une surface conique de manière à constituer une rampe coopérant avec des galets 172 (182) portés par une face des segments 17 (18) orientées intérieurement par rapport au centre du tambour 1. Le déplacement du coulisseau 24 (25) est commandé pneumatiquement par le canal d'alimentation 26 (27) visible sur les figures 1A et 1B, le rappel en position étant assuré par le ressort 22 (23).

Ces dispositions de systèmes de prise de bourrelets permettent effectivement de saisir les bourrelets d'une carcasse de pneumatique mais également de réaliser le rapprochement axial des systèmes de prise l'un vis-à-vis de l'autre et donc des logements de réception des bourrelets l'un vis-à-vis de l'autre, opération nécessaire pour réaliser la conformation symétrique de la carcasse. Les systèmes de prise de bourrelets décrits ici ne le sont qu'à titre d'exemples, il est clair que d'autres solutions peuvent être adoptées pour réaliser les systèmes de prise de bourrelets dans la mesure où elles répondent aux fonctionnalités précitées.

La surface de réception 30 de la carcasse est constituée par l'ensemble des surfaces extérieures 310 de plaques 31 montées et arrangées circonférentiellement autour du fût 5. Ces plaques 31 sont déplaçables radialement par l'intermédiaire de moyens mécaniques d'expansion 33, 34, 36.

Ainsi, chaque plaque 31 est fixée sur une chape 32 sur laquelle sont articulées les extrémités respectives 331 et 341 de deux bras 33 et 34 dont les deux autres extrémités 332 et 342 sont montées sur une couronne 35 montée mobile axialement sur le fût 5. Sur l'un des bras 33 est articulé l'extrémité 361 d'un contre bras 36 dont l'autre extrémité 362 est articulée sur une couronne 37 fixée sur le fût 5.

L'actionnement en déplacement axial de la couronne 35 permet donc de réaliser le basculement des bras 33 et 34 grâce au blocage généré par le contre bras 36 et ainsi de changer la position radiale des plaques 31, le centre de chaque plaque 31 se déplaçant dans un plan perpendiculaire à l'axe du tambour. Ce déplacement axial est commandé par un vérin 40 monté sur le fût 5 et dont le piston 401 porte un prolongement axial sur lequel la couronne mobile 35 est fixée de sorte à être solidaire du piston. Une paroi de butée 402 du piston 401 dont la position axiale est réglable délimite la course maximale de la couronne 35 vers la couronne 37 qui correspond à la position expansée du tambour 1.

Les plaques 31 présentent une surface extérieure 310 usinée dans un volume parallélépipédique, dont le profil est choisi afin d'être identique au profil de pose des produits sur la carcasse, on peut notamment prévoir des épaulements. Quel que soit ce profil, la plus grande longueur de chaque plaque s'étend dans la direction axiale.

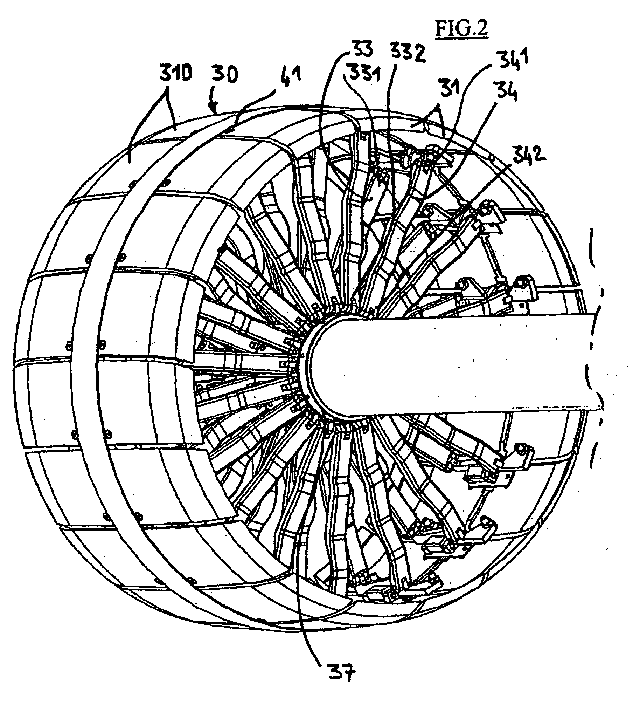

Comme le montre plus spécifiquement la figure 2, l'ensemble des plaques 31 sont recouvertes d'un manchon élastique 41 qui assure la continuité entre les plaques en position expansée du tambour 1 et contribue à garantir le positionnement des plaques les unes vis-à-vis des autres comme on l'expliquera plus en détails dans ce qui suit, dans cette position expansée du tambour 1.

En plus de ces moyens d'expansion, le tambour 1 possède des moyens de guidage (32, 43, 312) des plaques 31 dans leur « montée » radiale vers l'extérieur du tambour et dans leur « descente » radiale vers le centre du tambour. En effet, il est essentiel pour la fiabilité et la longévité du tambour et plus particulièrement des plaques et de leur mécanisme de déplacement, que ces dernières qui se superposent en position rétractée du tambour, le fassent de façon ordonnée et maîtrisée afin d'éviter les chocs entre elles susceptibles de provoquer une usure prématurée et des défauts importants de surface des plaques et également afin d'empêcher le frottement entre ces plaques susceptible en créant de nouvelles contraintes de détériorer le système mécanique d'expansion (synchronisme plaque-bras-couronne) et susceptible de modifier le profil des plaques.

C'est pourquoi les bras 33 et 34 sont montés sur chaque plaque 31 par l'intermédiaire de la chape 32 sur laquelle les extrémités 331 et 341 sont articulées et qui est elle-même fixée par l'intermédiaire d'une deuxième chape 42 solidaire de chaque plaque 31. La deuxième chape 42 est articulée par rapport à la première chape 32, l'axe de l'articulation 38 étant parallèle à l'axe du tambour 1 de sorte que la plaque peut pivoter par rapport aux bras 33 et 34.

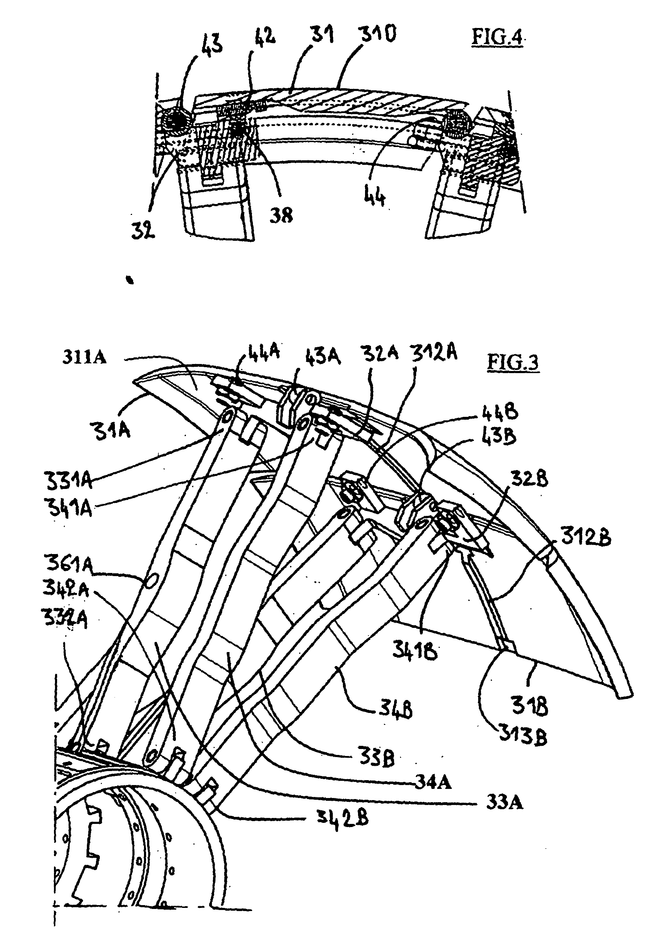

Chaque chape 32 associé à une plaque 31 porte un dispositif de guidage de la plaque adjacente. A cette fin, chaque chape 32 est montée à proximité de l'un des bords latéraux de chaque plaque 31 parallèles à l'axe du tambour 1 de sorte que chaque chape 32 est disposée à proximité de la plaque adjacente. Chaque chape 32 porte un galet de guidage 43 qui est disposé circonférentiellement à l'extérieur de la plaque 31 associée à ladite chape, comme on le voit sur les figures 3 et 4.

Chaque plaque 31 porte sur sa surface intérieure 311 par rapport au centre du tambour une came 312 s'étendant circonférentiellement et destinée à coopérer avec le galet 43 portée par la chape fixée sur la plaque adjacente à cette plaque 31. La came débouche respectivement aux deux extrémités opposées de la plaque sur un logement, respectivement 313 et 314, de réception du galet de la plaque adjacente afin d'optimiser les deux positions de butée correspondant à la position rétractée et à la position expansée du tambour 1.

La position rétractée du tambour 1 correspond à la position radiale des plaques 31 la plus proche du centre du tambour et superposées les unes par rapport aux autres et la position expansée du tambour correspond à la position radiale des plaques où leurs surfaces extérieures 310 des plaques 31 forment une surface cylindrique et sont radialement éloignées du centre du tambour.

On peut avantageusement prévoir un réglage d'ajustement permettant de jouer sur le jeu entre les plaques pour obtenir avec un même jeu de plaques des diamètres expansés distincts de l'ordre de quelques millimètres. Ainsi, en jouant sur la longueur circonférentielle du logement 313, on crée une plage réduite de position de contact du galet 43 qui correspond à une plage réduite de diamètre expansé, la détermination du diamètre désiré étant réalisée par la fixation axiale de la paroi de butée 402 du vérin 40.

De plus, chaque plaque 31 porte des vis de contact 44 disposés axialement de part et d'autre du galet 43 en étant sensiblement alignés circonférentiellement avec ledit galet afin de créer des appuis supplémentaires entre les plaques dans la seule position limite correspondant à la position expansée du tambour. Pour des questions de symétrie et de stabilité, la présence de deux vis de contact 44 pour chaque plaque 31 semble satisfaisante.

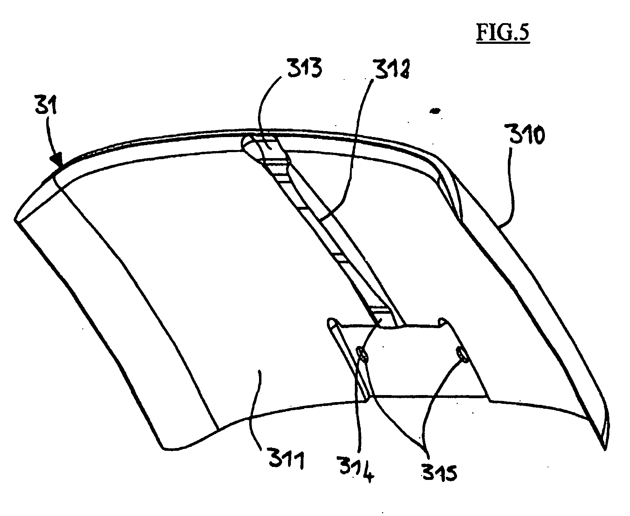

La figure 5 montre également sur la surface intérieure 311 d'une plaque 31 des trous de passage 315 de vis de fixation de la chape 42.

On comprendra mieux le fonctionnement de ce dispositif de guidage en référence à la figure 3 dans laquelle on utilisera les lettres A et B accolées aux références des différents éléments correspondant à deux plaques adjacentes 31A et 31B.

Sur la figure 3, le tambour est en position expansée donc les plaques 31A et 31 B sont dans leur position la plus éloignée du centre du tambour, la couronne mobile 35 étant au plus près de la couronne fixe 37.

Dans cette position les plaques 31A et 31B sont côte à côte sans être au contact, cependant le galet 43B porté par la chape 32B liée à la plaque 31B, est au contact avec la plaque 31A et plus précisément, il est en appui dans le logement 313 de la plaque A (non visible sur la figure 3) situé à l'une des extrémités de la came 312A, les pions 44B étant au contact de la surface 311A. Le contact entre la plaque 31A et le galet 43B est maintenu grâce au manchon élastique 41 qui apparaît sur la figure 2.

Pour permettre le passage du tambour 1 de sa position expansée vers sa position rétractée, on actionne le vérin 40 avec le déplacement du piston vers l'extérieur du tambour entraînant ainsi le déplacement axial de la couronne 35 en l'éloignant de la couronne fixe 37. Les bras 33 et 34 actionnant les plaques 31, basculent alors grâce au blocage généré par le contre bras 36 entraînant le déplacement radial desdits plaques vers le centre du tambour.

Pendant ce mouvement de rapprochement vers le centre du tambour, les plaques restent en contact les unes des autres grâce au galet de guidage 43 et à la force du manchon élastique 41 qui maintient le contact galet-plaque. Ainsi les plaques 31A et 31B sont entraînées par leurs bras respectifs 33A, 34A et 33B, 34B radialement vers le centre du tambour, le galet 43B suivant alors la came 312A ce qui entraîne la plaque 31B à se glisser sous la plaque 31 A avec un jeu minimum entre la surface intérieure 311A et la surface extérieure 310 de la plaque B.

Ce positionnement lors du mouvement radial des plaques 31 est possible grâce au degré de liberté de pivotement des plaques vis-à-vis de la chape 32 autour de l'articulation 38. Cette disposition permet effectivement d'accepter une très large plage de profil pour les plaques notamment des profils avec épaulements.

Lorsque le galet 43B arrive en fin de parcours de la came 312A, il entre en contact avec le logement 314 de la plaque A (non visible sur la figure 3) qui détermine la deuxième position limite des plaques correspondant à la position rétractée optimisée du tambour. Dans cette position rétractée, les plaques 31 se recouvrent largement les unes les autres.

Le passage inverse de la position rétractée du tambour à sa position expansée se déduit sans difficulté de ce qui a été décrit ci-dessus.

Ce tambour permet donc la réalisation à la fois de pneumatiques de très grand diamètre même s'ils ont une largeur faible en proportion et de pneumatiques de très grand diamètre et de très grande largeur puisque l'on réussit à avoir un tambour qui présente une surface de réception de faible diamètre en position rétractée et de très grand diamètre en position expansée tout en garantissant une solidité de la surface de réception permettant d'accepter des efforts importants de pose de produits. On peut ainsi accepter des pneumatiques destinés à être montés aussi bien sur des jantes de diamètre 13 pouces que de diamètre 22 pouces, et aller jusqu'à une expansion de diamètre de la carcasse du pneumatique de l'ordre de 200%.

Par ailleurs, il est clair que pour réaliser dans un même diamètre de carcasse à conformer, des pneumatiques de diamètres externes différents, il est nécessaire de changer l'ensemble des plaques à l'exception du réglage possible lorsque la différence n'est que de quelques millimètres comme on l'a dit précédemment. Cependant, le reste du tambour et du mécanisme de déplacement des plaques restant identique, il ne s'agit ici que d'un démontage rapide des deux vis fixant les chapes 42 aux plaques. En fait, dans un même diamètre de carcasse à conformer, seules les plaques sont dimensionnelles, tout le reste du tambour est multidimensionnel.

## Revendications

1. Tambour de conformation de carcasses de pneumatique, monté sur un fût (5), comportant deux systèmes de prise de bourrelet (7, 8) d'une carcasse (2) à conformer montés sur ledit fût et une surface de réception (30) de ladite carcasse constituée par l'ensemble des surfaces extérieures (310) de plaques (31) arrangées circonférentiellement autour du fût (5), et des moyens d'expansion mécaniques comprenant pour chaque plaque (31) deux bras (33, 34) articulés entre une chape (32) et une couronne (35) déplaçable axialement sur le fut 5, et un contre-bras (36) articulé entre l'un desdits bras (33) et une couronne (37) montée fixement sur le fut (5), et permettant de déplacer les plaques (31) radialement entre une position rétractée et une position expansée du tambour (1) par déplacement axial de la couronne (35) en combinaison avec le blocage généré par le contre bras (36) et la couronne (37), **caractérisé en ce que** les plaques (31) sont reliées aux chapes (32) par l'intermédiaire d'articulations (38) situées sur la face intérieure (311) de chacune desdites plaques (31) et permettant un pivotement des plaques (31) autour d'axes parallèles à l'axe du tambour (1), et comportent des moyens de guidage par lesquels chaque plaque (31) s'appuie par sa face intérieure (311) sur le moyen de guidage de la plaque adjacente, autorisant le positionnement des surfaces extérieures (310) de chaque plaque à un niveau radial constant en position expansée du tambour et autorisant un basculement des plaques autour des articulations (38) de façon à ce qu'elles se superposent les unes aux autres en position rétractée du tambour (1).

2. Tambour selon la revendication 1, dans lequel les moyens de guidage de chaque plaque (31) comprennent une came (312) portée par la surface intérieure (311) de ladite plaque et un galet de guidage (43), coopérant avec la came (312) de la plaque adjacente.

3. Tambour selon la revendication 2, dans lequel la came (312) de chaque plaque (31) s'étend circonférentiellement et débouche à chacune de ses extrémités sur un logement (313, 314) de réception du galet de guidage (43) de la plaque adjacente, les deux logements (313, 314) portés par chaque plaque (31) correspondant respectivement aux positions expansée et rétractée du tambour (1).

4. Tambour selon l'une quelconque des revendications 1 à 3, dans lequel un dispositif d'ajustement (313, 43) permet un réglage de l'ordre de quelques millimètres du diamètre final d'expansion du tambour (1).

5. Tambour selon les revendications 3 et 4, dans lequel le dispositif d'ajustement comprend le logement de réception (313) de chaque plaque (31) correspondant à la position expansée du tambour (1), ce dernier étant étendu circonférentiellement de sorte que sa longueur permet différents positionnements stables du galet de guidage (43) de la plaque adjacente.

6. Tambour selon l'une quelconque des revendications 1 à 5, dans lequel un manchon élastique (41) assure le contact entre la came (312), les logements (313, 314) d'une plaque et le galet de guidage (43) de la plaque adjacente.

## Patentansprüche

1. Aufbautrommel zum Formen von Luftreifenkarkassen, die auf einem Schaft (5) montiert ist, die zwei Wulstaufnahmesysteme (7, 8) für die Wülste einer zu formenden Karkasse (2), die auf dem Schaft montiert sind, und eine Auflageoberfläche (30) für die Karkasse, die aus einer Mehrzahl äußerer Oberflächen (310) von Platten (31) besteht, die in Umfangsrichtung um den Schaft (5) angeordnet sind, und mechanische Ausfahrvorrichtungen aufweist, die für jede Platte (31) zwei Arme (33, 34), die zwischen einem Zwischenteil (32) und einem Kranz (35), der in axialer Richtung auf dem Schaft (5) verschiebbar ist, gelenkig angebracht sind, und einen Gegenarm (36), der zwischen einem dieser Arme (33) und einem fest auf dem Schaft (5) montierten Kranz (37) gelenkig angebracht ist, umfassen und die die Verschiebung der Platten (31) in radialer Richtung zwischen einer eingefahrenen Position und einer ausgefahrenen Position der Trommel (1) durch axiale Verschiebung des Kranzes (35) in Kombination mit der Blockade, die durch den Gegenarm (36) und den Kranz (37) erzeugt wird, ermöglichen, **dadurch gekennzeichnet, dass** die Platten (31) über Gelenke (38), die auf der Innenseite (311) aller Platten (31) angeordnet sind, mit den Zwischenteilen (32) verbunden sind, die ein Verkippen der Platten (31) um Achsen parallel zur Achse der Trommel (1) ermöglichen, und dass sie Führungseinrichtungen aufweisen, durch die jede Platte (31) mit ihrer Innenseite (311) auf die Führungseinrichtung der benachbarten Platte gedrückt wird, was die Positionierung der äußeren Oberfläche (310) aller Platten in einer konstanten radialen Höhe in der ausgefahrenen Position der Trommel ermöglicht und ein Kippen der Platten um die Gelenke (38) ermöglicht, so dass sie in der eingefahrenen Position der Trommel (1) übereinander liegen.

2. Trommel nach Anspruch 1, wobei die Führungseinrichtung jeder Platte (31) eine Nockenbahn (312), die von der inneren Oberfläche (311) der Platte getragen wird, und eine Führungsrolle (43) umfasst, die mit der Nockenbahn (312) der benachbarten Platte zusammenwirkt.

3. Trommel nach Anspruch 2, wobei sich die Nockenbahn (312) jeder Platte (31) in Umfangsrichtung erstreckt und an ihren beiden Enden in eine Vertiefung (313, 314) zur Aufnahme der Führungsrolle (43) der benachbarten Platte mündet, wobei die beiden Vertiefungen (313, 314), die jede Platte (31) aufweist, der ausgefahrenen Position bzw. der eingefahrenen Position der Trommel (1) entsprechen.

4. Trommel nach einem der Ansprüche 1 bis 3, wobei eine Justiervorrichtung (313, 43) eine Einstellung des Enddurchmessers der Trommel (1) im ausgefahrenen Zustand in der Größenordnung von einigen Millimetern ermöglicht.

5. Trommel nach den Ansprüchen 3 und 4, wobei die Justiervorrichtung die Aufnahmevertiefung (313) jeder Platte (31) umfasst, die der ausgefahrenen Position der Trommel (1) entspricht, wobei letztere so in Umfangsrichtung ausgedehnt ist, dass ihre Länge verschiedene stabile Positionierungen der Führungsrolle (43) der benachbarten Platte ermöglicht.

6. Trommel nach einem der Ansprüche 1 bis 5, wobei ein elastisches Band (41) den Kontakt zwischen der Nockenbahn (312), den Vertiefungen (313, 314) einer Platte und der Führungsrolle (43) der benachbarten Platte gewährleistet.

## Claims

1. A shaping drum for tyre carcasses, which is mounted on a barrel (5), comprising two systems for holding the bead (7, 8) of a carcass (2) to be shaped which are mounted on said barrel and a receiving surface (30) for said carcass which is formed by all the outer surfaces (310) of plates (31) arranged circumferentially around the barrel (5), and mechanical expansion means comprising for each plate (31) two arms (33, 34) which are articulated between a clevis (32) and a crown (35) which is axially displaceable on the barrel (5), and a counter-arm (36) articulated between one of said arms (33) and a crown (37) mounted fixedly on the barrel (5), and permitting displacement of the plates (31) radially between a retracted position and an expanded position of the drum (1) by axial displacement of the crown (35) in combination with the locking generated by the counter-arm (36) and the crown (37), **characterised in that** the plates (31) are connected to the clevises (32) by means of articulations (38) located on the inner face (311) of each of said plates (31) and permitting pivoting of the plates (31) about axes parallel to the axis of the drum (1), and comprising guide means by means of which each plate (31) bears by its inner face (311) on the guide means of the adjacent plate, permitting the positioning of the outer surfaces (310) of each plate at a constant radial level in the expanded position of the drum and permitting tilting of the plates about articulations (38) such that they are superposed on each other in the retracted position of the drum (1).

2. A drum according to Claim 1, in which the guide means for each plate (31) comprise a cam (312) borne by the inner surface (311) of said plate and a guide roller (43), cooperating with the cam (312) of the adjacent plate.

3. A drum according to Claim 2, in which the cam (312) of each plate (31) extends circumferentially and opens at each of its ends into a housing (313, 314) for receiving the guide roller (343) of the adjacent plate, the two housings (313, 314) borne by each plate (31) corresponding respectively to the expanded and retracted positions of the drum (1).

4. A drum according to any one of Claims 1 to 3, in which an adjustment device (313, 43) permits adjustment of the order of a few millimetres of the final diameter of expansion of the drum (1).

5. A drum according to Claims 3 and 4, in which the adjustment device comprises the housing (313) for receiving each plate (31) corresponding to the expanded position of the drum (1), the latter being extended circumferentially such that its length permits different stable positioning operations of the guide roller (43) of the adjacent plate.

6. A drum according to any one of Claims 1 to 5, in which an elastic sleeve (41) provides the contact between the cam (312), the housings (313, 314) of a plate and the guide roller (43) of the adjacent plate.
